# EUROPÄISCHE PATENTSCHRIFT

(11) **EP 2 839 230 B1**
(45) Veröffentlichungstag und Bekanntmachung des Hinweises auf die Patenterteilung: **15.05.2019**
(21) Anmeldenummer: 13715136.1
(22) Anmeldetag: 27.03.2013
(51) Int. Cl.: F26B 23/00, F23L 7/00, F26B 23/02, F23G 7/06, F26B 15/12, F26B 21/04

(54) **ANLAGE ZUM BEHANDELN VON GEGENSTÄNDEN**
SYSTEM FOR TREATING OBJECTS
INSTALLATION DE TRAITEMENT D'OBJETS

(30) Priorität: 20.04.2012 DE 102012007769
(43) Veröffentlichungstag der Anmeldung: 25.02.2015
(73) Patentinhaber: Eisenmann SE, 71032 Böblingen (DE)
(72) Erfinder: SLUKA, Daniel, 71332 Waiblingen (DE); ERHARDT, Reiner, 70178 Stuttgart (DE)
(74) Vertreter: Ostertag & Partner Patentanwälte mbB
(86) Internationale Anmeldenummer: PCT/EP2013/000917
(87) Internationale Veröffentlichungsnummer: WO 2013/156105

(56) Entgegenhaltungen:
- WO-A1-92/01897
- WO-A1-2011/092224
- US-A- 5 128 003

## Beschreibung

Die Erfindung betrifft eine Anlage zum Behandeln von Gegenständen mit
a) einer Vorrichtung zum Temperieren der Gegenstände, bei der ein Temperiertunnel in einem Gehäuse untergebracht ist, welcher wenigstens einen Luftauslass und wenigstens einen Lufteinlass umfasst; wobei
b) dem Temperiertunnel wenigstens ein Heizaggregat zugeordnet ist, in welchem eine heiße Primärgasströmung erzeugbar ist;
c) das heiße Primärgas in einen Umwälzluft-Wärmetauscher leitbar ist, in welchem Luft aus dem Temperiertunnel durch heißes Primärgas erhitzbar ist, die dem Temperiertunnel als Umwälzluft wieder in einem Kreislauf über den wenigstens einen Lufteinlass zuführbar ist;
d) das Heizaggregat nach Art eines Blockheizkraftwerkes derart mit einem elektrischen Generator gekoppelt ist, dass beim Betrieb des Heizaggregates elektrische Energie erzeugt wird;
e) Mittel vorhanden sind, mittels welchen Tunnelatmosphäre als Abluft aus dem Temperiertunnel absaugbar ist.

In solchen vom Markt her und aus der WO 2011/092224 A1 bekannten Anlagen werden insbesondere frisch lackierte Fahrzeugkarosserien, aber auch Teile von Fahrzeugkarosserien oder andere Gegenstände, getrocknet. Derartige Trockner werden beheizt, indem unter anderem Luft aus dem Temperiertunnel und meist aus gegenüber der Gesamtlänge des Temperiertunnels kurzen Tunnelabschnitten abgesaugt, in einem Heizaggregat mittels eines Wärmetauschers aufgeheizt und dem Temperiertunnel oder entsprechenden Tunnelabschnitten wieder in einem Kreislauf zugeführt wird.

Beim Trocknen von frisch lackierten Gegenständen ist die dem Temperiertunnel oder Tunnelabschnitt entnommene Luft hauptsächlich mit Lösemittel beladen, welches bei dem Trocknungsvorgang freigesetzt wird. In dieser Luft finden sich außerdem beim Trocknen der Gegenstände frei werdende Beschichtungsbestandteile.

Die obige Maßnahme d) beruht auf der Erkenntnis, dass für die Erwärmung der Umwälzluft meist nur ein Teil der Energie verwertet wird, die in dem Primärgas des Heizaggregates steckt. Ein elektrischer Generator kann dabei beispielsweise über eine Gasturbine angetrieben werden, die ihrerseits durch die Primärgasströmung betrieben wird. Hierdurch wird die durch das Heizaggregat erzeugte nutzbare Energie effizient verwertet und es können elektrische Verbraucher mit elektrischer Energie versorgt werden, ohne dass hierzu eine zusätzliche Energiequelle erforderlich sein muss.

Es ist Aufgabe der Erfindung, eine Anlage der eingangs genannten Art im Hinblick auf eine effiziente Energieverwertung und Ressourcenverwertung weiterzuentwickeln.

Diese Aufgabe wird bei einer Anlage der eingangs genannten Art mit den Merkmalen gemäß Anspruch 1 gelöst.

Wie erwähnt, werden beim Temperieren von beispielsweise beschichteten Gegenständen Lösemittel freigesetzt, welche von der im Temperiertunnel herrschenden Atmosphäre aufgenommen werden. Damit die Tunnelatmosphäre stets Lösemittel von den zu trocknenden Gegenständen aufnehmen kann und keinen gesättigten Zustand erreicht, sind die Mittel vorhanden, mittels welchen Tunnelatmosphäre als Abluft aus dem Temperiertunnel absaugbar ist. Diese Maßnahme eröffnet darüber hinaus jedoch weitere Möglichkeiten für einen effizienten Energiehaushalt.

Die Abluft ist zumindest teilweise einem Brenner des Heizaggregats in Form von Verbrennungsluft zuführbar. Auf diese Weise agiert das Heizaggregat gleichsam als thermische Nachverbrennung für die Lösemittel aus dem Temperiertunnel.

Es ist eine Mischeinheit vorhanden, mittels welcher die Abluft mit Sauerstoff O₂ anreicherbar ist. Auf diese Weise kann die Verbrennung im Heizaggregat verbessert werden.

In diesem Zusammenhang ist eine Elektrolyseeinheit vorhanden, in welcher elektrolytisch Sauerstoff O₂ erzeugbar ist, welcher der Mischeinheit zuführbar ist.

Die für die Elektrolyse in der Elektrolyseeinheit erforderliche elektrische Energie wird zumindest teilweise durch den Generator erzeugt. Hierdurch wird die gewonnene Energie effizient für den Betrieb der Anlage genutzt.

Dabei ist es besonders günstig, wenn
- mittels der Elektrolyseeinheit eine Wasserelektrolyse durchführbar ist;
- die Elektrolyseeinheit mit der Sabatier-Reaktionseinheit verknüpft ist;
wobei
- bei der Wasserelektrolyse entstehender Wasserstoff H₂ zu der Sabatier-Reaktionseinheit führbar ist und/oder bei dem Sabatier-Prozess entstehendes Wasser H₂O zu der Elektrolyseeinheit führbar ist.

Das für den Sabatier-Prozess notwendige Kohlendioxid CO₂ kann besonders vorteilhaft mittels eines Kohlendioxid-Abscheiders erhalten werden, mittels welchem Kohlendioxid CO₂ aus Abgas des Heizaggregates abtrennbar ist, welches dann der Sabatier-Reaktionseinheit zuführbar ist.

Außerdem ist es energetisch günstig, wenn in der Sabatier-Reaktionseinheit entstehendes Methan CH₄ in Form von Brenngas zu einem Brenner des Heizaggregates leitbar ist.

Eine weitere günstige Art zur Erzeugung elektrischer Energie besteht, wenn ein ORC-Reaktor vorhanden ist, in welchem in an und für sich bekannter Art und Weise ein Organic Rankine Cylce betreibbar ist, welcher derart mit einem elektrischen Generator gekoppelt ist, dass beim Betrieb des ORC-Reaktors elektrische Energie erzeugt wird. Diese elektrische Energie kann dann wieder der Anlage zugeführt und dort genutzt werden.

Der ORC-Reaktor kann seinerseits energieeffizient betrieben werden, wenn diesem thermische Energie über ein Heizfluid zuführbar ist, welches in einem Heizkreis durch einen Wärmetauscher hindurch leitbar ist, wo das Heizfluid Abwärme des Heizaggregates aufnimmt, die es im ORC-Reaktor als thermisehe Energie wieder abgibt. In diesem Fall wird zusätzlich die bislang noch nicht genutzte Abwärme des Heizaggregates als Energiequelle verwertet.

Zusätzlich oder alternativ kann dem ORC-Reaktor thermische Energie über ein Heizfluid zugeführt werden, welches durch einen Wärmetauscher hindurch geführt wird, wo das Heizfluid Wärme von Abluft aus dem Temperiertunnel aufnimmt, die es im ORC-Reaktor als thermische Energie wieder abgibt.

Wenn die Vorrichtung zum Temperieren der Gegenstände einen Kühltunnel umfasst, ist es günstig, wenn dieser mittels einer Adsorptionskälteeinrichtung gekühlt wird, der thermische Energie aus der Abluft des Temperiertunnels über einen Wärmetauscherkreis zuführbar ist, wozu Abluft durch einen Wärmetauscher des Wärmetauscherkreises leitbar ist.

Die Gesamtenergiebilanz der Anlage kann noch verbessert werden, wenn diese eine Vorrichtung zum Beschichten von Gegenständen umfasst.

In diesem Fall ist es besonders günstig, wenn die Anlage eine Pyrolyseeinrichtung umfasst, in welcher verbrennbare Reststoffe, die in der Beschichtungsvorrichtung anfallen, pyrolysierbar sind, wobei Pyrolysegas entsteht,
und
Pyrolysegas zumindest teilweise einem Brenner des Heizaggregats in Form von Brenngas zuführbar ist. Das bedeutet, dass das Brenngas Methan CH₄ aus dem Sabatier-Prozess und/oder Pyrolysegas umfassen kann. Dabei kann das Brenngas zusätzlich beispielsweise Erdgas umfassen, welches aus einer externen Quelle zugeführt wird.

In einer Beschichtungsvorrichtung entsteht bei der Beschichtung von Gegenständen eine Atmosphäre aus Prozessluft, welche mit Lösemittel und/oder Beschichtungssubstanzen beladen ist. Diese Prozessluft muss von diesen unerwünschten Bestandteilen befreit werden. Hierzu sind Adsorptionsfiltereinrichtungen bekannt, die jedoch ihrerseits nach Aufnahme einer Maximalmenge an Lösemittel oder sonstigen Bestandteilen wieder regeneriert werden müssen. Hierzu wird in der Regel die Temperatur erhöht und die aufgenommenen Substanzen desorbieren. Wenn die Beschichtungsvorrichtung nun also eine Adsorptionsfiltereinrichtung umfasst, mittels welcher Prozessluft der Beschichtungsvorrichtung filterbar ist, ist es besonders vorteilhaft, wenn eine Regenerationseinrichtung vorhanden ist, mittels welcher zum Zwecke der Regeneration Abluft aus dem Trockentunnel durch die Adsorptionsfiltereinrichtung hindurch leitbar ist.

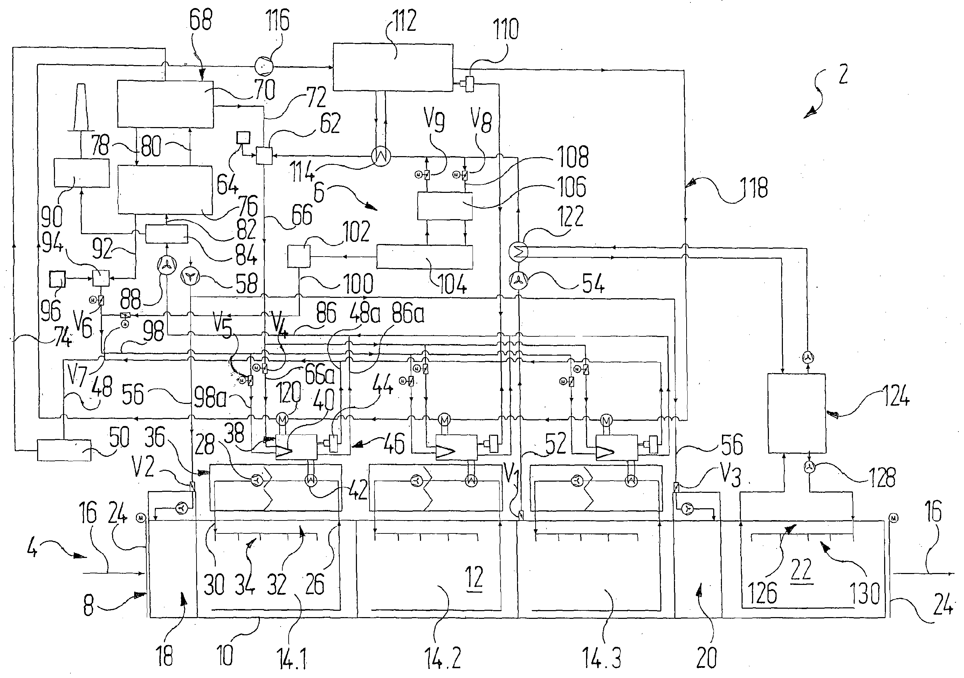

Nachstehend wird nun ein Ausführungsbeispiel der Erfindung anhand der einzigen Figur näher erläutert.

In dieser ist mit 2 insgesamt eine Anlage bezeichnet, in welcher nicht eigens gezeigte Gegenstände in verschiedenen Behandlungszonen behandelt werden, von denen beispielhaft eine Trocknungszone 4 und eine Beschichtungszone 6 gezeigt sind. In der Trocknungszone 4 werden beispielsweise die in der Beschichtungszone 6 lackierten Gegenstände getrocknet; auf die Beschichtungszone 6 wird weiter unten nochmals zurückgekommen. Bei den Gegenständen kann es sich z.B. um Fahrzeugkarosserien oder um Teile von Fahrzeugkarosserien handeln; grundsätzlich kann das nachfolgend erläuterte Konzept jedoch für die Behandlung beliebiger Gegenstände angewandt werden.

In der Trocknungszone 4 befindet sich als Beispiel für eine Temperiervorrichtung ein Trockner 8 mit einem Gehäuse 10, in dem ein Temperiertunnel in Form eines Trockentunnels 12 untergebracht ist. Der Trockentunnel 12 umfasst mehrere hintereinander angeordnete Tunnelabschnitte, wobei beim vorliegenden Ausführungsbeispiel drei Tunnelabschnitte 14.1, 14.2 und 14.3 gezeigt sind. Der Trockentunnel 12 kann in an und für sich bekannter Weise jedoch auch nur einen einzigen oder zwei Tunnelabschnitte oder auch mehr als drei Tunnelabschnitte aufweisen.

Die Gegenstände werden mit einem nicht dargestellten Fördersystem in einer Förderrichtung 16 gefördert und gelangen zunächst in eine Eingangsschleuse 18 und von dort in den Trockentunnel 12. Die Gegenstände verlassen schließlich den Trockner 8 durch eine Ausgangsschleuse 20 in getrocknetem Zustand, nachdem sie die Tunnelabschnitte 14.1, 14.2 und 14.3 durchfahren haben.

Der Trockner 8 umfasst außerdem einen Kühltunnel 22, durch welchen die Gegenstände gefördert werden, nachdem sie den Trockentunnel 12 durch Ausgangsschleuse 20 verlassen haben.

Am Eingang der Eingangsschleuse 18 und am Ausgang aus dem Kühltunnel 22 ist jeweils ein motorbetriebenes Tor 24 vorgesehen, um einen Austausch der Schleusen- bzw. Kühltunnelatmosphäre mit der Umgebung möglichst gering halten zu können.

Nachfolgend werden nun die Tunnelabschnitte 14.1, 14.2 und 14.3 und damit zusammenarbeitende Komponenten der Anlage 2 am Beispiel des Tunnelabschnitts 14.1 erläutert, wobei auch nur dort Bezugzeichen vorhanden sind. Das hierzu Gesagte gilt sinngemäß entsprechend für die weiteren Tunnelabschnitte 14.2 und 14.3.

Der Trockentunnel 12 weist im Tunnelabschnitt 14.1 einen Luftauslass 26 auf, über welchen diese Tunnelluft mittels eines Gebläses 28 abgesaugt wird. Diese Tunnelluft wird dann über einen Lufteinlass 30 wieder in den Tunnelabschnitt 14.1 zurückgegeben, so dass Tunnelluft insgesamt in einem Kreislauf 32 als Umwälzluft umgewälzt wird. Die zurückgegebene Luft wird z.B. über Düsen 34 auf die zu trocknenden Gegenstände geleitet und ist üblicherweise zwischen etwa 140°C und 220°C heiß. Nachstehend sei angenommen, dass die lösemittelhaltige Luft in dem Tunnelabschnitt 14.1 etwa 200°C heiß ist.

In dem Kreislauf 32 durchströmt die Umwälzluft eine Konditioniereinheit 36, in welcher sie vor dem Wiedereintritt in den Tunnelabschnitt 14.2 z.B. gefiltert und von mitgeführten Partikeln befreit sowie gegebenenfalls be- oder entfeuchtet wird.

Insbesondere wird die Umwälzluft in der Konditioniereinheit 36 jedoch erhitzt, wozu dem Tunnelabschnitt 14.1 ein Heizaggregat 38 zugeordnet ist, mittels welchem aus dem Tunnelabschnitt 14.1 abgesaugte Luft erwärmt werden kann, bevor sie wieder in den Tunnelabschnitt 14.1 zurückgegeben wird.

Dadurch, dass jedem Tunnelabschnitt 14.1, 14.2 und 14.3 ein eigenes Heizaggregat 38 zugeordnet ist, können in den Tunnelabschnitten 14.1, 14.2, 14.3 unterschiedliche Temperaturen aufrecht zu erhalten, wie dies jeweils für den Trockenvorgang am günstigsten ist.

In dem Heizaggregat 38 wird über einen Brenner 40 in an und für sich bekannter Weise eine heiße Primärgasströmung erzeugt. Hierzu wird dem Heizaggregat 38 ein Brenngas und Verbrennungsluft zugeführt, worauf weiter unten nochmals eingegangen wird. Primärgas, welches in dem Heizaggregat 38 erzeugt wird, wird in einen Umwälzluft-Wärmetauscher 42 geleitet, der in dem Kreislauf 32 der Tunnelluft angeordnet ist und wo diese durch das heiße Primärgas erhitzt wird.

Bei einer nicht eigens gezeigten Abwandlung kann auch nur ein einziges Heizaggregat 38 für den Trockentunnel 12 vorgesehen sein. Gegebenenfalls gibt es dann auch nur einen einzigen Luftauslass 26 und einen einzigen Lufteinlass 30. Wenn mit einem einzigen Heizaggregat 38 in mehreren Tunnelabschnitten 14 unterschiedliche Temperaturen erzeugt werden sollen, so können diesem einzigen Heizaggregat mehrere Umwälzluft-Wärmetauscher 42 zugeordnet sein, mittels welchen Umwälzluft auf unterschiedliche Temperaturen erwärmt werden kann.

Auch mit einer nochmals modifizierten Abwandlung können mit nur einem einzigen Heizaggregat 38 und damit auch nur mit einem einzigen Blockheizkraftwerk 46 in mehreren Tunnelabschnitten 14 unterschiedliche Temperaturen erzeugt werden. Hierzu umfasst jeder Tunnelabschnitt 14 einen Kaltluft-Einlass mit einem Kaltluft-Klappenventil für nicht eigens vorgewärmte Frischluft und einen Warmluft-Einlass mit einem Warmluft-Klappenventil für vorgewärmte Frischluft. Über den Kaltluft-Einlass kann jedem Tunnelabschnitt 14 separat nicht vorgewärmte oder gegebenenfalls auch gekühlte Frischluft zugeführt werden. Über den Warmluft-Einlass kann jedem Tunnelabschnitt dagegen separat temperierte Frischluft zugeführt werden. Diese temperierte Frischluft wird ihrerseits mittels eines Wärmetauschers des Heizaggregates 38 erwärmt, welches dem Umwälzluft-Wärmetauscher 42 des hier beschriebenen Heizaggregates 38 entspricht. Außerdem ist jeder Tunnelabschnitt 14 über einen eigenen Abluft-Ausgang mit der Abluftleitung 52 verbunden, wobei der Abluft-Volumenstrom aus jedem Tunnelabschnitt 14 über ein gesondertes Klappenventil eingestellt werden kann.

Die Umwälzluft zum Temperieren der Gegenstände kann bei diesem Konzept lediglich innerhalb eines bestimmten Tunnelabschnitts 14 umgewälzt werden, ohne dass sie durch einen Wärmetauscher strömen muss. Um die Temperatur der umgewälzten Tunnelluft bzw. der Tunnelatmosphäre einzustellen, werden die Klappenventile des Kaltluft-Einlasses, des Warmluft-Einlasses und des Abluft-Ausganges aufeinander abgestimmt für jeden Tunnelabschnitt eingestellt. Abhängig von den Volumenströmen der abgesaugten Abluft und der zugeführten Kaltluft und Warmluft kann die Temperatur der Tunnelluft in einem Tunnelabschnitt 14 individuell eingestellt werden. Die Temperatur der umgewälzten Luft jedes Tunnelabschnitts 14 wird dabei außerdem mittels eines separaten Temperatursensors in Echtzeit überwacht, so dass auf Temperaturänderungen der Umwälzluft in jedem Tunnelabschnitt 14 zeitlich unmittelbar reagiert werden kann, indem die Klappenventile entsprechend angesteuert und die Volumenströme von Abluft, Kaltluft und Warmluft geändert werden.

Das Heizaggregat 38 ist derart mit einem elektrischen Generator 44 gekoppelt, dass durch den Generator 44 beim Betrieb des Heizaggregates 38 elektrische Energie erzeugt wird. Auf diese Weise ist ein Kraftwerk nach Art eines an und für sich bekannten Blockheizkraftwerks 46 ausgebildet. Die auf diese Weise gewonnene elektrische Energie wird über eine elektrische Leitung 48a in eine elektrische Sammelleitung 48 und über diese zu einem Stromspeicher 50 geleitet, von wo elektrische Energie zu einem späteren Zeitpunkt abgerufen und genutzt werden kann. Hierauf wird weiter unter eingegangen.

Wie bereits erwähnt wurde, herrscht in dem Trockentunnel 12 eine lösemittelhaltige Atmosphäre. Damit die Tunnelatmosphäre stets Lösemittel von den zu trocknenden Gegenständen aufnehmen kann und keinen gesättigten Zustand erreicht, wird weitgehend kontinuierlich lösemittelhaltige Tunnelatmosphäre aus dem Trockentunnel 12 entfernt und durch Frischluft ersetzt.

Hierzu wird Tunnelatmosphäre als Abluft über eine Abluftleitung 52 abgesaugt, in der ein Abluft-Gebläse 54 angeordnet ist, während unbelastete Frischluft über Frischluftleitungen 56 aus einer als Gebläse veranschaulichten Frischluftquelle 58 über die Eingangsschleuse 18 und die Ausgangsschleuse 20 des Trockners 8 in den Trockentunnel 12 nachgeführt wird. An der Eingangsschleuse 18 und der Ausgangsschleuse 20 sind nochmals eigene Frischluft-Gebläse 58 vorhanden.

In der Abluftleitung 52 und in den Frischluftleitungen 56 ist jeweils ein Klappenventil V1 bzw. V2 und V3 angeordnet. Über die Klappenventile V1, V2 und V3 können der Anteil an Abluft, die aus dem Trockentunnel 12 abgesaugt wird, und die Anteile der jeweils der Eingangs- oder der Ausgangsschleuse 18, 20 zugeführten Frischluft eingestellt werden.

Die Abluftleitung 52 führt zu einer Mischeinheit in Form einer Mischkammer 62 für Verbrennungsluft, wo die lösemittelhaltige Abluft mit Sauerstoff O₂ angereichert und gegebenenfalls mit einer Befeuchtereinrichtung 64 befeuchtet wird. Hierdurch wird Verbrennungsluft erhalten, welche den Brennern 40 jedes Heizaggregates 38 über jeweils eine Zweigleitung 66a einer sich verzeigenden Verbrennungsluftleitung 66 zugeführt wird. In jedem Zweig 66a der Verbrennungsluftleitung 66 ist ein motorbetriebenes Klappenventil V4 angeordnet, so dass der Zustrom an von der Mischkammer 62 kommender Verbrennungsluft für jeden Brenner 40 separat eingestellt werden kann.

Der Sauerstoff O₂, welcher der Abluft aus dem Trockentunnel 12 in der Mischkammer 62 zugeführt wird, stammt aus einer Sauerstoffquelle 68, die beim vorliegenden Ausführungsbeispiel als Elektrolyseeinheit 70 ausgebildet ist, in welcher elektrolytisch Sauerstoff O₂ erzeugt wird. Hierzu wird Wasser H₂O in an und für sich bekannter Weise elektrolytisch in Wasserstoff H₂ und Sauerstoff O₂ gespalten. Der Sauerstoff O₂ wird über eine Sauerstoffleitung 72 zur Mischkammer 62 geführt. Durch die so sauerstoffangereicherte Verbrennungsluft wird der Verbrennungsprozess in jedem Heizaggregat 38 verbessert.

Die für die Wasserelektrolyse erforderliche elektrische Energie wird durch die Generatoren 44 der Blockheizkraftwerke 46 erhalten und über eine elektrische Versorgungsleitung 74 von dem Stromspeicher 50 zur Elektrolyseeinheit 70 geleitet.

Die Wasserelektrolyse in der Elektrolyseeinheit 70 ist in an und für sich bekannter Weise mit einem Sabatier-Prozess verknüpft, der einer Sabatier-Reaktionseinheit 76 durchgeführt wird und bei dem aus Kohlendioxid CO₂ und Wasserstoff H₂ in bekannter Weise Methan CH₄ und Wasser H₂O gewonnen werden.

Für den Sabatier-Prozess wird derjenige Wasserstoff H₂ genutzt, der in der Elektrolyseeinheit 70 bei der Wasserelektrolyse entsteht. Dieser Wasserstoff H₂ wird der Sabatier-Reaktionseinheit 76 über eine Wasserstoffleitung 78 von der Elektrolyseeinheit 70 zugeführt. Im Gegenzug wird für die Wasserelektrolyse das im Sabatier-Prozess erhaltene Wasser H₂O verwendet, welches hierzu über eine Wasserleitung 80 von der Reaktionseinheit 76 zur Elektrolyseeinheit 70 gefördert wird.

Das beim Sabatier-Prozess in der Sabatier-Reaktionseinheit 76 eingesetzte Kohlendioxid CO₂ gelangt über eine Kohlendioxidleitung 82 aus einem Kohlendioxid-Abscheider 84 zur Sabatier-Reaktionseinheit 76. In dem Kohlendioxid-Abscheider 84 wird Kohlendioxid CO₂ in an und für sich bekannter Weise aus den Abgasen der Heizaggregate 38 abgetrennt. Hierzu werden deren Abgase über Abgasleitungen 86a abgeführt, die zu einer Abgassammelleitung 86 zusammenlaufen, welche zu dem Kohlendioxid-Abscheider 84 führt; in der Abgassammelleitung 86 ist ein Gebläse 88 angeordnet.

Die von Kohlendioxid CO₂ befreiten Abgase der Blockheizkraftwerke 46 werden von dem Kohlendioxid-Abscheider 84 zu einer Katalyseeinheit 90 geleitet, dort einer katalytischen Reinigung unterzogen und hiernach über Dach abgeführt.

Das bei dem Sabatier-Prozess erzeugte Methan CH₄ wird über eine Gasleitung 92 zu einer Mischkammer 94 für Brenngas geleitet, wo es mit Erdgas aus einer Erdgasquelle 96 vermischt wird, wodurch Brenngas für die Blockheizkraftwerke 46 bzw. deren Brenner 40 erhalten wird. Durch das erzeugte Methan CH₄ wird die benötigte Erdgasmenge verringert und Ressourcen geschont.

Das Brenngas wird den Brennern 40 jedes Heizaggregates 38 von der Mischkammer 94 über jeweils eine Zweigleitung 98a einer sich verzweigenden Brenngasleitung 98 zugeführt wird. In jedem Zweig 98a der Brenngasleitung 98 ist ein motorbetriebenes Klappenventil V5 angeordnet, so dass der Zustrom an von der Mischkammer 94 kommendem Brenngas für jeden Brenner 40 separat eingestellt werden kann. Der Mischkammer 94 ist ausgangsseitig außerdem ein motorbetriebenes Klappenventil V6 zugeordnet, über welches die von der Mischkammer 94 in die Brenngasleitung 98 eingespeiste Brenngasmenge eingestellt werden kann.

Stromab des Klappenventils V6 der Mischkammer 94 mündet eine Pyrolysegasleitung 100 über ein Klappenventil V7 in die Brenngasleitung 98. Über die Pyrolysegasleitung 100 kann Pyrolysegas in die Brenngasleitung 98 eingespeist werden und sich dort mit dem von der Mischkammer 94 kommenden Gas zu Brenngas vermischen. Wenn das Klappenventil V6 an der Mischkammer 94 geschlossen ist, wird den Brennern 40 der Blockheizkraftwerke 46 das Pyrolysegas allein als Brenngas zugeführt.

Das Pyrolysegas entsteht in einer Pyrolysekammer 102 bei der Pyrolyse von Reststoffen, die in der Beschichtungszone 6 entstehen. Als Beispiel für eine Quelle solcher Reststoffe ist eine Beschichtungskabine 104 gezeigt, in welcher Gegenstände in mehreren Schritte mit einer Lackierung versehen werden. Als verwertbare Reststoffe fallen dort unter anderem beispielsweise Lack-Overspray, Lackfilter, Reinigungstücher, Wachsrückstände und dergleichen an.

In einer Beschichtungskabine 104 werden beim Beschichtungsvorgang Lösemittel frei. Um diese Lösemittel aus der Beschichtungskabine 104 zu entfernen, wird diese von Kabinenluft durchströmt, die in an und für sich bekannter Weise durch die Beschichtungskabine 104 geführt wird und diese als lösemittelhaltige Prozessluft verlässt. Um die Lösemittel wieder aus der Prozessluft zu entfernen und um die Kabinenluft in einem Kreislauf wiederverwerten zu können, wird die Prozessluft aus der Beschichtungskabine 104 durch eine Adsorptionsfiltereinheit 106, beispielsweise ein Aktivkohlefilter, geführt und dabei gefiltert. In der Adsorptionsfiltereinheit 106 adsorbiert ein Filtermedium Lösemittel oder sonstige gasförmige Verunreinigungen. Von Zeit zu Zeit muss ein derartiges Filtermedium regeneriert und von aufgenommenem Lösemittel und sonstigen Verunreinigungen befreit werden.

Zu diesem Zweck geht von der Abluftleitung 52 aus dem Trockentunnel 12 als Regenerationseinrichtung eine Bypassleitung 108 ab, über welche die Filtereinheit 106 im Gegenstrom zur Prozessluft aus der Beschichtungskabine 104 von Abluft aus dem Trockentunnel 12 durchströmt werden kann. Bei der Temperatur der heißen Abluft desorbiert das Filtermedium aufgenommenes Lösemittel und sonstige Verunreinigungen wieder, welche dann von der heißen Abluft aufgenommen und aus dem Filter abgeführt werden. Die Abluft führt dann das Lösemittel und gegebenenfalls weitere gasförmige Verunreinigungen mit sich, wenn sie zur Mischkammer 62 für die Verbrennungsluft gelangt.

Auf diese Weise wird das verwendete Filter durch die Abluft aus dem Trockentunnel 12 thermisch gereinigt. In der Bypassleitung 108 sind stromab und stromauf der Filtereinheit 106 motorbetriebene Klappenventile V8 bzw. V9 angeordnet, so dass der Volumenstrom von Abluft durch die Filtereinheit 106 eingestellt und ein Zurückströmen von mit Lösemittel beladener Abluft in die Filtereinheit 106 unterbunden werden kann, wenn das Klappenventil V8 im Filterbetrieb geschlossen ist.

Zur elektrischen Energie, die für die Wasserelektrolyse in der Elektrolyseinheit 70 benötigt wird, trägt neben den Generatoren 44 der Blockheizkraftwerke 46 ein ORC-Generator 110 bei. Dieser ORC-Generator 110 wird in an und für sich bekannter Art und Weise mittels eines Organic Rankine Cycles (ORC) betrieben, der als Niedertemperatur-ORC-Prozess in einem ORC-Reaktor 112 bei Temperaturen ab etwa 80°C betrieben wird. Ein Arbeitsfluid des ORC-Prozesses treibt eine nicht eigens gezeigte Gasturbine an, die wiederum mit dem Generator gekoppelt ist.

Die zur Verdampfung des Arbeitsfluids des ORC-Prozesses erforderliche thermische Energie wird zum Teil über einen Wärmetauscher 114 gewonnen, der in der Abluftleitung 52 angeordnet ist und von der Abluft auf ihrem Weg zur Mischkammer 62 für Verbrennungsluft durchströmt wird. Zu diesem Zweck wird ein Heizfluid durch den Wärmetauscher 114 hindurch geführt, welches dort Wärme von der Abluft aufnimmt und als thermische Energie wieder im ORC-Reaktor 112 abgibt. Hierdurch kann die Abluft aus dem Trockentunnel 12 außerdem auf etwa Raumtemperatur abgekühlt und bei dieser Temperatur als Brennluft zu den Blockheizkraftwerken 46 geleitet werden, wodurch ein stabiler Betrieb der Blockheizkraftwerke 46 möglich ist.

Darüber hinaus wird die benötigte thermische Energie für den ORC-Prozess auch aus der Abwärme der Blockheizkraftwerke 46 gewonnen. Hierzu wird ein Heizfluid aus dem ORC-Reaktor 112 mittels einer Pumpe 116 in einem Heizkreis 118 durch Wärmetauscher 120 der Heizaggregate 38 und zurück zu dem ORC-Reaktor 112 geführt. Die Wärmetauscher 120 sind beispielsweise Schmieröl- oder Kühlwasserwärmetauscher, über welche nun Abwärme der Heizaggregate 38 auf das Heizfluid des ORC-Prozesses übertragen wird, die dann im ORC-Reaktor 112 als thermische Energie wieder abgegeben wird.

Die mittels der Generatoren 44 der Blockheizkraftwerke 46 und des ORC-Generators 110 erzeugte elektrische Energie kann für alle vorhandenen elektrischen Verbraucher genutzt werden. Beim vorliegenden Ausführungsbeispiel sind dies insbesondere die motorbetriebenen Klappenventile und die Gebläse.

Die Abluft aus dem Trockentunnel 12 wird noch durch einen weiteren Wärmetauscher eines Wärmetauscherkreises 122 geführt, über welchen eine Adsorptionskälteeinrichtung 124 mit thermischer Energie versorgt wird, die dem Kühltunnel 22 zugeordnet ist. Die Adsorptionskälteeinrichtung 124 kühlt einen Umwälzluftstrom, der in einem Kühlkreislauf 126 mittels eines Gebläses 128 aus dem Kühltunnel 22 abgesaugt und zur Adsorptionskälteeinrichtung 124 geführt wird. Nach ihrer Abkühlung wird die Umwälzluft wieder in den Kühltunnel 22 und über eine Düsenanordnung 130 auf die zu kühlenden Gegenstände abgegeben.

Bei einer nicht eigens gezeigten Abwandlung ist das Heizaggregat38 eine Wirbelschichtverbrennungsanlage, wie sie an und für sich bekannt ist. In diesem Fall können Reststoffe mit einem ausreichenden Heizwert, die in der Beschichtungszone 6 z.B. in der Beschichtungskabine 104 anfallen, als Ersatzbrennstoff neben separat zugeführten fossilen Brennstoffen eingesetzt werden.

## Patentansprüche

1. Anlage zum Behandeln von Gegenständen mit
a) einer Vorrichtung (8) zum Temperieren der Gegenstände, bei der ein Temperiertunnel (12) in einem Gehäuse (10) untergebracht ist, welcher wenigstens einen Luftauslass (26) und wenigstens einen Lufteinlass (30) umfasst;
wobei
b) dem Temperiertunnel (12) wenigstens ein Heizaggregat (38) zugeordnet ist, in welchem eine heiße Primärgasströmung erzeugbar ist;
c) das heiße Primärgas in einen Umwälzluft-Wärmetauscher (42) leitbar ist, in welchem Luft aus dem Temperiertunnel (12) durch heißes Primärgas erhitzbar ist, die dem Temperiertunnel (12) als Umwälzluft wieder in einem Kreislauf (32) über den wenigstens einen Lufteinlass (30) zuführbar ist;
d) das Heizaggregat (38) nach Art eines Blockheizkraftwerkes (46) derart mit einem elektrischen Generator (44) gekoppelt ist, dass beim Betrieb des Heizaggregates (38) elektrische Energie erzeugt wird;
e) Mittel (52, 54) vorhanden sind, mittels welchen Tunnelatmosphäre als Abluft aus dem Temperiertunnel (12) absaugbar ist;
**dadurch gekennzeichnet, dass**
f) Abluft zumindest teilweise einem Brenner (40) des Heizaggregats (38) in Form von Verbrennungsluft zuführbar ist;
g) eine Mischeinheit (62) vorhanden ist, mittels welcher die Abluft mit Sauerstoff O₂ anreicherbar ist;
h) eine Elektrolyseeinheit (70) vorhanden ist, in welcher elektrolytisch Sauerstoff O₂ erzeugbar ist, welcher der Mischeinheit (62) zuführbar ist;
i) für die Elektrolyse in der Elektrolyseeinheit (70) erforderliche elektrische Energie zumindest teilweise durch den Generator (46) erzeugt wird;
j) eine Sabatier-Reaktionseinheit (76) vorhanden ist, in welcher eine Sabatier-Reaktion durchführbar ist;
k) mittels der Elektrolyseeinheit (70) eine Wasserelektrolyse durchführbar ist;
1) die Elektrolyseeinheit (70) mit der Sabatier-Reaktionseinheit (76) verknüpft ist;
m) bei der Wasserelektrolyse entstehender Wasserstoff H₂ zu der Sabatier-Reaktionseinheit (76) führbar ist und/oder bei dem Sabatier-Prozess entstehendes Wasser H₂O zu der Elektrolyseeinheit (70) führbar ist.

2. Anlage nach Anspruch 1, **dadurch gekennzeichnet, dass** ein Kohlendioxid-Abscheider (84) vorhanden ist, mittels welchem Kohlendioxid CO₂ aus Abgas des Heizaggregates (38) abtrennbar ist, welches der Sabatier-Reaktionseinheit (76) zuführbar ist.

3. Anlage nach Anspruch 1 oder 2, **dadurch gekennzeichnet, dass** in der Sabatier-Reaktionseinheit (76) entstehendes Methan CH₄ in Form von Brenngas zu einem Brenner (40) des Heizaggregates (38) leitbar ist.

4. Anlage nach einem der Ansprüche 1 bis 3, **dadurch gekennzeichnet, dass** ein ORC-Reaktor (112) vorhanden ist, in welchem ein Organic Rankine Cylce betreibbar ist, welcher derart mit einem elektrischen Generator (110) gekoppelt ist, dass beim Betrieb des ORC-Reaktors (112) elektrische Energie erzeugt wird.

5. Anlage nach Anspruch 4, **dadurch gekennzeichnet, dass** dem ORC-Reaktor (112) thermische Energie über ein Heizfluid zuführbar ist, welches in einem Heizkreis (118) durch einen Wärmetauscher (120) hindurch leitbar ist, wo das Heizfluid Abwärme des Heizaggregates (38) aufnimmt, die es im ORC-Reaktor (112) als thermische Energie wieder abgibt.

6. Anlage nach Anspruch 4 oder 5, **dadurch gekennzeichnet, dass** dem ORC-Reaktor (112) thermische Energie über ein Heizfluid zuführbar ist, welches durch einen Wärmetauscher (114) hindurch geführt wird, wo das Heizfluid Wärme von Abluft aus dem Temperiertunnel (12) aufnimmt, die es im ORC-Reaktor (112) als thermische Energie wieder abgibt.

7. Anlage nach einem der Ansprüche 1 bis 6, **dadurch gekennzeichnet, dass** die Vorrichtung (8) zum Temperieren der Gegenstände einen Kühltunnel (22) umfasst, welcher mittels einer Adsorptionskälteeinrichtung (124) gekühlt wird, der thermische Energie aus der Abluft des Temperiertunnels (12) über einen Wärmetauscherkreis (122) zuführbar ist, wozu Abluft durch einen Wärmetauscher des Wärmetauscherkreises (122) leitbar ist.

8. Anlage nach einem der Ansprüche 1 bis 7, **dadurch gekennzeichnet, dass** die Anlage (2) außerdem eine Vorrichtung (104) zum Beschichten von Gegenständen umfasst.

9. Anlage nach Anspruch 8, **dadurch gekennzeichnet, dass** die Anlage (2) eine Pyrolyseeinrichtung (100) umfasst, in welcher verbrennbare Reststoffe, die in der Beschichtungsvorrichtung (104) anfallen, pyrolysierbar sind, wobei Pyrolysegas entsteht,
und
Pyrolysegas zumindest teilweise einem Brenner (40) des Heizaggregats (38) in Form von Brenngas zuführbar ist.

10. Anlage nach Anspruch 8 oder 9, **dadurch gekennzeichnet, dass** die Beschichtungsvorrichtung (104) eine Adsorptionsfiltereinrichtung (106) umfasst, mittels welcher Prozessluft der Beschichtungsvorrichtung (104) filterbar ist, wobei eine Regenerationseinrichtung (108) vorhanden ist, mittels welcher zum Zwecke der Regeneration Abluft aus dem Trockentunnel (12) durch die Adsorptionsfiltereinrichtung (106) hindurch leitbar ist.

## Claims

1. Installation for treating objects having
a) a device (8) for temperature control of the objects, in which a temperature control tunnel (12) is accommodated in a housing (10), which tunnel comprises at least one air outlet (26) and at least one air inlet (30);
wherein
b) the temperature control tunnel (12) being assigned at least one heating unit (38), in which a hot primary gas flow can be generated;
c) the hot primary gas being leadable into a circulating air heat exchanger (42), in which air from the temperature control tunnel (12) can be heated by hot primary gas and can be fed back to the temperature control tunnel (12) as circulating air in a circuit (32) via the at least one air inlet (30);
d) the heating unit (38) is coupled in the manner of a combined heat and power unit (46) to an electric generator (44) in such a way that electrical energy is generated during the operation of the heating unit (38);
e) means (52, 54) are provided, by means of which tunnel atmosphere can be sucked out of the temperature control tunnel (12) as exhaust air;
**characterized in that**
f) exhaust air can be supplied at least partly to a burner (40) of the heating unit (38) in the form of combustion air;
g) a mixing unit (62) is provided, by means of which the exhaust air can be enriched with oxygen O₂;
h) an electrolysis unit (70) is provided, in which oxygen O₂ can be electrolytically produced and can be supplied to the mixing unit (62);
i) electrical energy required for the electrolysis in the electrolysis unit (70) is generated at least partly by the generator (46);
j) a Sabatier reaction unit (76) is provided, in which a Sabatier reaction can be carried out;
k) an electrolysis of water can be carried out by means of the electrolysis unit (70);
I) the electrolysis unit (70) is linked to the Sabatier reaction unit (76);
m) hydrogen H₂ produced in the electrolysis of water being leadable to the Sabatier reaction unit (76) and/or water H₂O produced in the Sabatier process being leadable to the electrolysis unit (70).

2. Installation according to Claim 1, **characterized in that** a carbon dioxide separator (84) is provided, by means of which carbon dioxide CO₂ can be separated from exhaust gas of the heating unit (38) and can be supplied to the Sabatier reaction unit (76).

3. Installation according to Claim 1 or 2, **characterized in that** methane CH₄ produced in the Sabatier reaction unit (76) can be led in the form of combustible gas to a burner (40) of the heating unit (38).

4. Installation according to one of Claims 1 to 3, **characterized in that** an ORC reactor (112) is provided, in which an Organic Rankine Cylce can be performed, which is coupled to an electric generator (110) in such a way that electrical energy is generated during the operation of the ORC reactor (112).

5. Installation according to Claim 4, **characterized in that** the ORC reactor (112) can be supplied with thermal energy via a heating fluid which can be led in a heating circuit (118) through a heat exchanger (120), where the heating fluid absorbs waste heat of the heating unit (38) which it releases again as thermal energy in the ORC reactor (112).

6. Installation according to Claim 4 or 5, **characterized in that** the ORC reactor (112) can be supplied with thermal energy via a heating fluid which is led through a heat exchanger (114), where the heating fluid absorbs heat from exhaust air from the temperature control tunnel (12) which it releases again as thermal energy in the ORC reactor (112).

7. Installation according to one of Claims 1 to 6, **characterized in that** the device (8) for temperature control of the objects comprises a cooling tunnel (22) which is cooled by means of an adsorption refrigerating device (124) which can be supplied with thermal energy from the exhaust air of the temperature control tunnel (12) via a heat exchanger circuit (122), for which exhaust air can be led through a heat exchanger of the heat exchanger circuit (122).

8. Installation according to one of Claims 1 to 7, **characterized in that** the installation (2) further comprises a device (104) for coating objects.

9. Installation according to Claim 8, **characterized in that** the installation (2) comprises a pyrolysis device (100), in which combustible residual materials arising in the coating device (104) can be pyrolysed, resulting in pyrolysis gas,
and
pyrolysis gas can be supplied in the form of combustible gas at least partly to a burner (40) of the heating unit (38).

10. Installation according to 8 or 9, **characterized in that** the coating device (104) comprises an adsorption filter device (106), by means of which process air of the coating device (104) can be filtered, a regeneration device (108) being provided, by means of which exhaust air from the drying tunnel (12) can be led through the adsorption filter device (106) for the purpose of regeneration.

## Revendications

1. Installation de traitement d'objets, avec
a) un dispositif (8) de conditionnement thermique des objets, selon lequel un tunnel de conditionnement thermique (12) est logé dans un boîtier (10) qui comprend au moins une sortie d'air (26) et au moins une admission d'air (30) ;
sachant que
b) au moins un organe de chauffage (38) est associé au tunnel de conditionnement thermique (12), organe dans lequel un flux de gaz primaire chaud peut être produit ;
c) le gaz primaire chaud peut être dirigé dans un échangeur de chaleur (42) à air recyclé, dans lequel l'air provenant du tunnel de conditionnement thermique (12) peut être chauffé par le gaz primaire chaud qui, en tant qu'air recyclé, peut être ramené en un circuit (32) au tunnel de conditionnement thermique (12) via l'admission d'air au moins unique (30) ;
d) l'organe de chauffage (38) est couplé à la manière d'une centrale de cogénération (46) à un générateur électrique (44) de telle sorte que de l'énergie électrique est produite lors du fonctionnement de l'organe de chauffage (38) ;
e) des moyens (52, 54) sont présents, au moyen desquels l'atmosphère du tunnel peut être évacuée du tunnel de conditionnement thermique (12) par aspiration en tant qu'air sortant ;
**caractérisée en ce que**
f) l'air sortant peut être apporté au moins pour partie à un brûleur (40) de l'organe de chauffage (38) sous forme d'air de combustion ;
g) une unité de mélangeage (62) est présente, au moyen de laquelle l'air sortant peut être enrichi en oxygène O₂ ;
h) une unité d'électrolyse (70) est présente, dans laquelle peut être produit par voie électrolytique de l'oxygène O₂ qui peut être apporté à l'unité de mélangeage (62);
i) l'énergie électrique nécessaire pour l'électrolyse dans l'unité d'électrolyse (70) est produite au moins pour partie par le générateur (46) ;
j) une unité (76) de réaction de Sabatier est présente, dans laquelle une réaction de Sabatier peut être effectuée ;
k) une électrolyse de l'eau peut être effectuée au moyen de l'unité d'électrolyse (70);
1) l'unité d'électrolyse (70) est combinée à l'unité (76) de réaction de Sabatier ;
m) l'hydrogène H₂ produit lors de l'électrolyse de l'eau peut être dirigé vers l'unité (76) de réaction de Sabatier et/ou l'eau H₂O produite lors du processus de Sabatier peut être dirigée vers l'unité d'électrolyse (70).

2. Installation selon la revendication 1, **caractérisée en ce qu'**un séparateur (84) de dioxyde de carbone est présent, au moyen duquel le dioxyde de carbone CO₂ peut être séparé du gaz d'échappement de l'organe de chauffage (38) qui peut être apporté à l'unité (76) de réaction de Sabatier.

3. Installation selon la revendication 1 ou 2, **caractérisée en ce que** le méthane CH₄ produit dans l'unité (76) de réaction de Sabatier peut être dirigé vers un brûleur (40) de l'organe de chauffage (38) sous forme de gaz combustible.

4. Installation selon l'une des revendications 1 à 3, **caractérisée en ce qu'**un réacteur ORC (112) est présent, dans lequel peut être exécuté un cycle organique de Rankine et qui est couplé à un générateur électrique (110) de telle sorte que de l'énergie électrique est produite lors du fonctionnement du réacteur ORC (112).

5. Installation selon la revendication 4, **caractérisée en ce que** de l'énergie thermique peut être apportée au réacteur ORC (112) par l'intermédiaire d'un fluide de chauffage qui peut être dirigé, dans un circuit de chauffage (118), à travers un échangeur de chaleur (120) où le fluide de chauffage absorbe la chaleur perdue de l'organe de chauffage (38), qu'il restitue en tant qu'énergie thermique dans le réacteur ORC (112).

6. Installation selon la revendication 4 ou 5, **caractérisée en ce que** de l'énergie thermique peut être apportée au réacteur ORC (112) par l'intermédiaire d'un fluide de chauffage qui est dirigé à travers un échangeur de chaleur (114) où le fluide de chauffage absorbe la chaleur de l'air sortant du tunnel de conditionnement thermique (12), qu'il restitue en tant qu'énergie thermique dans le réacteur ORC (112).

7. Installation selon l'une des revendications 1 à 6, **caractérisée en ce que** le dispositif (8) de conditionnement thermique des objets comprend un tunnel de refroidissement (22) qui est refroidi au moyen d'un appareil frigorifique (124) à adsorption auquel de l'énergique thermique provenant de l'air sortant du tunnel de conditionnement thermique (12) peut être apporté par l'intermédiaire d'un circuit d'échange de chaleur (122), l'air sortant pouvant être dirigé à cet effet à travers un échangeur de chaleur du circuit d'échange de chaleur (122).

8. Installation selon l'une des revendications 1 à 7, **caractérisée en ce que** l'installation (2) comprend en outre un dispositif (104) d'enduction d'objets.

9. Installation selon la revendication 8, **caractérisée en ce que** l'installation (2) comprend un appareil de pyrolyse (100) dans lequel peuvent être pyrolisés les résidus combustibles produits dans le dispositif d'enduction (104), sachant que du gaz de pyrolyse est produit,
et que le gaz de pyrolyse peut être apporté au moins pour partie à un brûleur (40) de l'organe de chauffage (38) sous forme de gaz combustible.

10. Installation selon la revendication 8 ou 9, **caractérisée en ce que** le dispositif d'enduction (104) comprend un appareil de filtration (106) à adsorption au moyen duquel l'air de processus du dispositif d'enduction (104) peut être filtré, sachant qu'un appareil de régénération (108) est présent au moyen duquel, à des fins de régénération, l'air sortant du tunnel de séchage (12) peut être dirigé à travers l'appareil de filtration (106) à adsorption.
